(19) Europäisches Patentamt
European Patent Office
Office européen des brevets

(11) **EP 4 450 279 A1**

(12) **EUROPEAN PATENT APPLICATION**
published in accordance with Art. 153(4) EPC

(43) Date of publication:
**23.10.2024   Bulletin 2024/43**

(21) Application number: **22907070.1**

(22) Date of filing: **02.11.2022**

(51) International Patent Classification (IPC):
**B32B 27/00** (2006.01)     **B32B 27/32** (2006.01)
**B32B 27/40** (2006.01)     **B65D 65/40** (2006.01)

(52) Cooperative Patent Classification (CPC):
**B32B 27/00; B32B 27/32; B32B 27/40; B65D 65/40**

(86) International application number:
**PCT/JP2022/040963**

(87) International publication number:
**WO 2023/112537 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **17.12.2021   JP 2021205531**

(71) Applicants:
 • **Toyo Seikan Group Holdings, Ltd.
   Shinagawa-ku
   Tokyo 141-8627 (JP)**
 • **Toyo Seikan Co., Ltd.
   Tokyo 141-8640 (JP)**

(72) Inventors:
 • **EBATA, Atsushi
   Yokohama-shi, Kanagawa 240-0062 (JP)**
 • **TASHIRO, Yuki
   Yokohama-shi, Kanagawa 240-0062 (JP)**
 • **TAGUCHI, Tomoaki
   Yokohama-shi, Kanagawa 240-0062 (JP)**
 • **YOSHIKAWA, Seishi
   Yokohama-shi, Kanagawa 230-0001 (JP)**
 • **YASUUMI, Takahiro
   Yokohama-shi, Kanagawa 230-0001 (JP)**

(74) Representative: **J A Kemp LLP
   80 Turnmill Street
   London EC1M 5QU (GB)**

(54)   **LAMINATE**

(57)   A laminate 10 has a layer configuration including two thermoplastic resin layers 11 and 13 and an adhesive layer 15 provided between the two thermoplastic resin layers 11 and 13. The adhesive layer 15 is formed of an adhesive incorporating a polyrotaxane. The laminate 10 contains 80 mass% or greater of an olefin-based resin with respect to a total amount of the laminate 10.

**FIG. 2**

**Description**

Technical Field

The present invention relates to a laminate, and more particularly to an olefin-based laminate that contains a large amount of an olefin-based resin and is suitable for producing a pouch by heat sealing bonding or ultrasonic sealing bonding.

Background Art

Olefin-based resins typified by a propylene-based resin and an ethylene-based resin have been used in the packaging field for a long time, and particularly due to ease of heat sealing, a pouch having an unstretched olefin-based resin film as a sealant resin layer is widely produced.

Further, since a packaging material such as a pouch is required to have strength properties such as puncture strength, the above-mentioned unstretched olefin-based resin film is used in the form of a laminate including a reinforcing film such as a stretched film stacked on the unstretched olefin-based resin film. In such a laminate, the reinforcing film is stacked on the unstretched olefin-based resin film using a dry lamination adhesive or the like.

Meanwhile, in recent years, recyclability of materials has been required from the viewpoint of environmental issues. Therefore, in a laminate including an unstretched olefin-based resin film, monomaterialization is required so that the content of the olefin-based resin is increased as much as possible and materials other than the olefin-based resin are eliminated as much as possible. This is because a laminate containing a large amount of an olefin-based resin and having high monomaterial properties can be reused as an olefin-based resin.

However, a pouch produced using a laminate containing a large amount of an olefin-based resin has low impact resistance and low bag drop strength. When such a pouch is dropped from a certain height, the pouch is often broken, and remedy of such situation is required.

In recent years, polymers having a molecular structure called a polyrotaxane have been developed. This polymer is a complex of molecules and has a structure in which a chain-like axle molecule penetrates through rings of a plurality of cyclic molecules and a bulky group is bonded to both terminals of the axle molecule, and the cyclic molecules do not slip out of the axle molecule due to steric hindrance. Such complexes are called supramolecules. Various applications of the polyrotaxane have been proposed.

For example, Patent Literature 1 proposes a laminate for a vacuum heat insulating material including a thermal fusion layer and a gas barrier layer that are bonded to each other with a polyrotaxane-containing adhesive. In such a laminate, since the polyrotaxane is incorporated in the adhesive, the adhesive follows the expansion and contraction of the layers, and as a result, delamination does not occur and the laminate exhibits excellent gas barrier properties.

Patent Literature 2 proposes a cell packaging material having an outer layer containing a polyrotaxane. The cell packaging material has improved abrasion resistance and scratch resistance since the outer layer contains a polyrotaxane instead of PET or Ny.

Further, Patent Literature 3 proposes a thermoplastic elastomer composition containing a polyrotaxane-containing thermoplastic urethane elastomer. The elastomer composition can provide a molded article excellent in elongation and strength since the composition contains the polyrotaxane.

As described above, various applications of the polyrotaxane have been proposed, but no study has been made on the incorporation of the polyrotaxane in an adhesive used in a laminate containing a large amount of an olefin-based resin and having high monomaterial properties.

Citation List

Patent Literature

Patent Literature 1: JP 2021-001650 A
Patent Literature 2: JP 6153183 B
Patent Literature 3: JP 6655555 B

Summary of Invention

Technical Problem

Accordingly, an object of the present invention is to provide an olefin-based laminate that contains a large amount of an olefin-based resin, is suitable for recycle use, and is suitable for producing a pouch excellent in impact resistance and bag drop strength.

Another object of the present invention is to provide an olefin-based laminate mainly containing an olefin-based resin, the olefin-based laminate is produced by using an adhesive incorporating a polyrotaxane.

Solution to Problem

According to the present invention, there is provided a laminate having a layer configuration including two thermoplastic resin layers and an adhesive layer provided between the two thermoplastic resin layers, wherein

the adhesive layer is formed of an adhesive incorporating a polyrotaxane, and
the laminate contains 80 mass% or greater of an olefin-based resin with respect to a total amount of the laminate.

In the laminate (hereinafter referred to as an olefin-based laminate) of the present invention, the following aspects are suitably employed.

(1) The olefin-based resin is an ethylene-based resin or a propylene-based resin.
(2) The olefin-based resin is a resin composition containing an ethylene-based resin and a propylene-based resin.
(3) In the adhesive layer, the polyrotaxane is incorporated in an amount of less than 17 mass%.
(4) In the adhesive layer, the polyrotaxane is incorporated in a urethane-based adhesive.
(5) In the polyrotaxane, a functional group at a terminal of a side chain of a cyclic molecule is a hydroxyl group.
(6) Of the two thermoplastic resin layers, one thermoplastic resin layer is an unstretched sealant film containing the olefin-based resin, and the other thermoplastic resin layer is formed of an unstretched or stretched film.
(7) The other thermoplastic resin layer is formed of a stretched film, and the stretched film is provided with an inorganic coating or an organic coating.
(8) An intermediate thermoplastic resin layer is provided between the one thermoplastic resin layer and the other thermoplastic resin layer.
(9) The other thermoplastic resin layer is a stretched film, the intermediate thermoplastic resin layer is an unstretched or stretched film, and at least one of the other thermoplastic resin layer or the intermediate thermoplastic resin layer contains the olefin-based resin.
(10) At least one of the stretched film forming the other thermoplastic resin layer or the stretched film forming the intermediate thermoplastic resin layer is provided with an inorganic coating or an organic coating.

According to the present invention, there is also provided a pouch produced from the olefin-based laminate.

Advantageous Effects of Invention

The olefin-based laminate of the present invention has a basic configuration including two thermoplastic resin layers and an adhesive layer provided between the two thermoplastic resin layers, and contains 80 mass% or greater of an olefin-based resin with respect to the total mass of the laminate. Therefore, the olefin-based laminate has high monomaterial properties as for the olefin-based resin and is excellent in recyclability.

In addition, in the present invention, a small amount of a material other than the olefin-based resin is used on condition that the olefin-based resin content is within the above-mentioned range, and in particular, an adhesive incorporating a polyrotaxane is used. As a result, the pouch (bag-shaped container) formed of the laminate exhibits high bag drop strength and is effectively prevented from being broken when dropped from a height, although the pouch is mostly formed of an olefin-based resin.

Since the olefin-based laminate of the present invention adopts various layer configurations suitable for a packaging material within a range in which the above-mentioned basic configuration and the like are satisfied, the laminate can improve various properties required of a packaging material such as a pouch.

Brief Description of Drawings

FIG. 1 is a diagram for illustrating a molecular structure of a polyrotaxane used in the present invention.
FIG. 2 is a diagram showing a basic layer configuration of an olefin-based laminate of the present invention.
FIG. 3 is a diagram showing a cross-sectional structure of a pouch produced from the laminate of FIG. 2.

Description of Embodiments

Polyrotaxane

First, a polyrotaxane incorporated in an adhesive layer in the present invention is described.

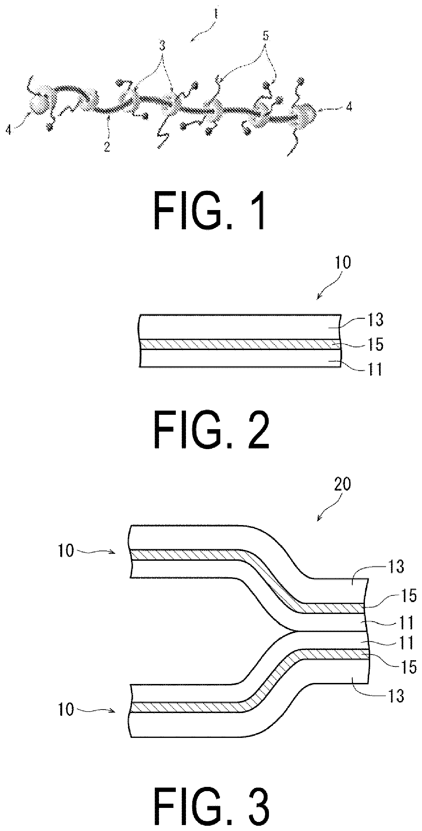

A polyrotaxane is a known compound, and as shown in FIG. 1, a polyrotaxane molecule denoted as a whole by reference sign 1 has a complex molecular structure formed of a chain-like axle molecule 2 and cyclic molecules 3. Specifically, the polyrotaxane molecule has a structure in which the plurality of cyclic molecules 3 include the chain-like axle molecule 2, and the axle molecule 2 penetrates through the inside of rings of the cyclic molecules 3. Therefore, although the cyclic molecules 3 can freely slide on the axle molecule 2, the cyclic molecules 3 are prevented from slipping out of the axle molecule 2 since a bulky terminal group 4 is formed at both terminals of the axle molecule 2.

More specifically, since the cyclic molecules 3 can slide on the axle molecule 2, the adhesive layer incorporating the polyrotaxane has a high degree of freedom of the molecules, and is capable of easily following the expansion and contraction of the adjacent layers and dispersing the stress when a load is applied, which is a factor for improving the impact resistance.

In such a polyrotaxane, various molecules are known as the chain-like axle molecule 2. For example, the chain-like axle molecule 2 may be linear or branched as long as it can penetrate through the rings of the cyclic molecules, and is generally formed of a polymer.

Examples of the polymer forming the axle molecule 2 include polyvinyl alcohol, polyvinyl pyrrolidone, cellulose-based resins (e.g., carboxymethyl cellulose, hydroxyethyl cellulose, and hydroxypropyl cellulose), polyacrylamide, polyethylene oxide, polyethylene glycol, polypropylene glycol, polyvinyl acetal, polyvinyl methyl ether, polyamine, polyethyleneimine, casein, gelatin, starch, olefin-based resins (e.g., polyethylene and polypropylene), polyester, polyvinyl chloride, styrene-based resins (e.g., polystyrene and an acrylonitrile-styrene copolymer resin), acrylic resins (e.g., poly(meth)acrylic acid, polymethyl methacrylate, polymethyl acrylate, and an acrylonitrile-methyl acrylate copolymer resin), polycarbonate, polyurethane, a vinyl chloride-vinyl acetate copolymer resin, polyvinyl butyral, polyisobutylene, polytetrahydrofuran, polyaniline, an acrylonitrile-butadiene-styrene copolymer (ABS resin), polyamide (e.g., nylon), polyimide, polydiene (e.g., polyisoprene and polybutadiene), polysiloxane (e.g., polydimethylsiloxane), polysulfone, polyimine, polyacetic anhydride, polyurea, polysulfide, polyphosphazene, polyketone, polyphenylene, and polyhaloolefin. These polymers may be appropriately copolymerized or modified.

In the present invention, the polymer forming the axle molecule 2 is suitably polyethylene glycol, polyisoprene, polyisobutylene, polybutadiene, polypropylene glycol, polytetrahydrofuran, polydimethylsiloxane, polyethylene, polypropylene, polyvinyl alcohol, or polyvinyl methyl ether, and polyethylene glycol is most suitable from the viewpoint of affinity and reactivity with the adhesive incorporating the polyrotaxane. From the viewpoint of monomaterial properties, polyethylene and polypropylene are suitable.

Further, examples of the bulky terminal group 4 formed at both terminals of the axle molecule 2 include an adamantyl group, a trityl group, a fluoresceinyl group, a dinitrophenyl group, and a pyrenyl substrate, and an adamantyl group is particularly suitable from the viewpoint of, for example, ease of introduction.

The molecular weight of the axle molecule described above is not particularly limited, but if it is too large, the affinity with the adhesive component tends to be poor, and if it is too small, the mobility of the cyclic molecules tends to be lower and the impact resistance improving effect tends to be low. From such a viewpoint, the weight average molecular weight Mw of the axle molecule 2 is suitably within the range of from about 1000 to 100000.

The cyclic molecules 3 need to have a ring having a size capable of including the axle molecule 2. Examples of such a ring include a cyclodextrin ring, a crown ether ring, a benzo crown ring, a dibenzo crown ring, and a dicyclohexano crown ring, and a cyclodextrin ring is particularly preferable.

A plurality of the above-mentioned cyclic molecules 3 include one axle molecule 2. In general, when the maximum inclusion number of the cyclic molecules that can include one axle molecule is defined as 1, the inclusion number of the cyclic molecules 3 is preferably within the range of from 0.001 to 0.6, more preferably from 0.002 to 0.5, and further preferably from 0.003 to 0.4. If the inclusion number of the cyclic molecules 3 is too large, the cyclic molecules 3 are densely present with respect to one axle molecule, so that the mobility of the cyclic molecules 3 is lowered, and the impact resistance improving effect tends to be low. On the other hand, if the inclusion number is too small, the gap between the axle molecules 2 is narrowed, so that the mobility is lowered and the impact resistance improving effect tends to be low.

The maximum inclusion number of the cyclic molecules 3 with respect to one axle molecule 2 can be calculated from the length of the axle molecule 2 and the thicknesses of the rings of the cyclic molecules 3.

For example, when the axle molecule 2 is formed of polyethylene glycol and the rings of the cyclic molecules 3 are $\alpha$-cyclodextrin rings, the maximum inclusion number is calculated as follows.

Specifically, the length of two repeating units [-CH$_2$-CH$_2$O-] of polyethylene glycol approximates the thickness of one $\alpha$-cyclodextrin ring. Therefore, the maximum inclusion number of the cyclic molecules is determined by calculating the number of repeating units of the polyethylene glycol from the molecular weight, and determining 1/2 of the number of repeating units as the maximum inclusion number. The maximum inclusion number is defined as 1.0, and the inclusion number of the cyclic molecules is adjusted to fall within the above-mentioned range.

In the present invention, a side chain may be introduced into the rings of the above-mentioned cyclic molecules 3. The side chain is shown by reference sign 5 in FIG. 1.

Specifically, introduction of such a side chain 5 into the ring forms an appropriate space between the adjacent axle molecules 2 more reliably, and is advantageous in improving the impact resistance. In addition, introduction of the side chain 5 imparts reactivity to the adhesive component incorporating the polyrotaxane, and a crosslinked structure with the adhesive is formed. As a result, the strength of a pouch formed using the adhesive can be further improved.

The side chain 5 is suitably formed of repetition of organic chains having from 3 to 20 carbon atoms, and such a side chain has a weight average molecular weight of from about 300 to 10000.

The side chain 5 as described above is introduced by utilizing a functional group of the ring of the cyclic molecule 3 and modifying the functional group. For example, an $\alpha$-cyclodextrin ring has 18 hydroxyl groups as functional groups, and side chains are introduced via these hydroxyl groups. That is, a maximum of 18 side chains can be introduced into one $\alpha$-cyclodextrin ring. For example, when side chains are bonded to 9 of 18 hydroxyl groups of an $\alpha$-cyclodextrin ring, the degree of modification of the hydroxyl groups is 50%. Such a degree of modification is set within an appropriate range according to the adhesive component used in combination.

In the present invention, the side chain 5 (organic chain) as described above may be linear or branched as long as the cyclic molecules 3 can slide on the axle molecule 2 without impairment of the properties of polyrotaxane. A side chain having an appropriate size can be introduced by reacting an appropriate compound with a functional group of the ring using ring-opening polymerization, radical polymerization, cationic polymerization, anionic polymerization, RAFT polymerization, NMP polymerization, or the like.

For example, a side chain derived from a cyclic compound such as a cyclic lactone, a cyclic ether, a cyclic acetal, a cyclic amine, a cyclic carbonate, a cyclic iminoether, or a cyclic thiocarbonate can be introduced by ring-opening polymerization. Among them, a cyclic ether, a cyclic siloxane, a lactone, and a cyclic carbonate are preferable from the viewpoint of easy availability, high reactivity, and ease of adjustment of the size (molecular weight).

The compound used for introducing the side chain 5 by radical polymerization is a radical polymerizable compound, but the ring of the cyclic molecule 3 of the polyrotaxane 1 does not have an active site serving as a radical starting point. Therefore, prior to the reaction with the radical polymerizable compound, it is necessary to react a compound for forming a radical starting point, such as an organohalogen compound, with the functional group (hydroxyl group) of the ring to form an active site that serves as a radical starting point.

As the radical polymerizable compound used for introducing a side chain by radical polymerization, a compound having at least one group having an ethylenically unsaturated bond, for example, a functional group such as a (meth)acrylic group, a vinyl group, or a styryl group (hereinafter, the compound is referred to as an ethylenically unsaturated monomer) is suitably used.

As is understood from the above description, the side chain 5 introduced into the ring of the cyclic molecule 3 may have a repeating unit introduced therein, such as one having an -O-bond, an -NH- bond, or an -S- bond, or may have a substituent such as a hydroxyl group, a carboxyl group, an acyl group, a phenyl group, a halogen atom, a silyl group, a mercapto group, a vinyl group, an NCO group, or an NCS group, depending on the introduction method of the side chain 5.

Further, depending on the kind of the functional group possessed by the compound used for introducing the side chain 5, a part of the side chain may be bonded to a functional group of a ring of a cyclic molecule possessed by another axle molecule to form a pseudo-crosslinked structure.

In the polyrotaxane 1 most suitably used in the present invention, the axle molecule 2 is formed of polyethylene glycol to which an adamantyl group is bonded as the terminal group 4, the cyclic molecule 3 has an $\alpha$-cyclodextrin ring, and further, the side chain 5 (having an OH group at the terminal) such as polycaprolactone is introduced into the ring.

Basic Configuration

With reference to FIG. 2, an olefin-based laminate 10 of the present invention containing the above-mentioned polyrotaxane has a basic configuration including two thermoplastic resin layers 11 and 13 and an adhesive layer 15 provided between the two thermoplastic resin layers 11 and 13 on condition that the olefin-based laminate 10 contains 80 mass% or greater of an olefin-based resin, particularly 90 mass% or greater of an ethylene-based resin or a polypropylene-based resin.

That is, since the laminate 10 of the present invention contains a very large amount of the olefin-based resin, it has high monomaterial properties and is excellent in recyclability. For example, when collected as a waste after use, the laminate 10 can be reused as an olefin-based resin alone or as a mixture with a virgin olefin-based resin after crushing, washing, drying, and the like as appropriate, so that deterioration of physical properties due to recycle use can be avoided.

Thermoplastic resin layers 11 and 13;

In FIG. 1, in forming the thermoplastic resin layers 11 and 13, an olefin-based resin is usually used in order to realize the above-mentioned olefin-based resin content. Examples of the olefin-based resin include ethylene-based resins such as low-density polyethylene, high-density polyethylene, and copolymer resins of ethylene and other olefins; and propylene-based resins such as polypropylene and copolymer resins of propylene and other olefins. Of course, other olefin-based resins can also be used, but ethylene-based resins and propylene-based resins that are widely used in the field of packaging materials are suitable.

The olefin-based resin may be a resin composition containing an ethylene-based resin and a propylene-based resin, or alternatively, it is also possible to form the thermoplastic resin layer 11 using an ethylene-based resin or a propylene-based resin, and form the thermoplastic resin layer 13 using a propylene-based resin or an ethylene-based resin. However, the thermoplastic resin layers 11 and 13 are suitably formed by using the same olefin-based resin in order to enhance the monomaterial properties and to make the laminate most suitable for recycling.

In the present invention, the laminate 10 is suitable for producing a pouch 20 by using one thermoplastic resin layer 11 as a sealant resin layer and bonding the sealant resin layers to each other by heat sealing bonding or ultrasonic sealing bonding as shown in FIG. 3. In this case, the one thermoplastic resin (olefin-based resin) layer 11 used as a sealant resin layer is formed of an unstretched olefin-based resin film. The other thermoplastic resin (olefin-based resin) layer 13 stacked via the adhesive layer 15 is suitably stretched in order to improve strength and heat resistance.

A propylene-based resin is most suitably used as the olefin-based resin from the viewpoint of producing a pouch that exhibits excellent heat resistance even to heat treatment such as retort sterilization and that has high strength.

In the olefin-based laminate 10 used for forming the pouch 20, the unstretched olefin-based resin layer 11 (cast film) usually has a thickness of from 30 to 150 $\mu$m. The other stretched olefin-based resin layer 13 (stretched film) is stretched and heat-set to such an extent that strength and heat resistance are improved, and the thickness thereof is usually from about 10 to 30 $\mu$m.

Adhesive layer 15;

In the olefin-based laminate 10 as described above, the adhesive layer 15 is formed of an adhesive incorporating the polyrotaxane described above. That is, since the one olefin-based resin layer 11 (unstretched film) and the other olefin-based resin layer 13 (stretched film) are bonded to each other with such an adhesive, the pouch 20 excellent in heat resistance, impact resistance, and the like can be produced.

The adhesive layer 15 has only to be present between the thermoplastic resin layers 11 and 13, and does not have to be necessarily adjacent to the resin layers 11 and 13.

The adhesive incorporating the polyrotaxane is not particularly limited, and a dry lamination adhesive such as a urethane-based adhesive or an epoxy-based adhesive can be used. In order to make the most of the properties of the polyrotaxane, a urethane-based adhesive is suitably used.

The urethane-based adhesive is particularly effective when a functional group such as an epoxy group, an episulfide group, a thietanyl group, an OH group, an SH group, an $NH_2$ group, an NCO group, or an NCS group is introduced into the side chain 5 of the polyrotaxane. For example, polyurethane is formed by a reaction between a polyol and a polyisocyanate. That is, when the above-mentioned functional group is introduced into the side chain 5 of the polyrotaxane, the side chain 5 of the polyrotaxane is incorporated into the polymer chain of the polyurethane formed by the reaction between the polyol and the polyisocyanate to form a crosslinked structure, which is most suitable for improving the strength of the pouch.

The polyol used for forming the polyurethane adhesive is a compound having two or more OH groups per molecule, and typical examples thereof include di-, tri-, tetra-, penta-, and hexa-hydroxy compounds, polyesters containing two or more OH groups per molecule (polyester polyols), polyethers containing two or more OH groups per molecule (hereinafter referred to as polyether polyols), polycarbonates containing two or more OH groups per molecule (polycarbonate polyols), polycaprolactones containing two or more OH groups per molecule (polycaprolactone polyols), and acrylic polymers containing two or more OH groups per molecule (polyacrylic polyols). The most suitable polyol in the present invention is a polyester polyol from the viewpoint of high affinity with the polyrotaxane.

The polyester polyol as described above is a polymer produced by a condensation reaction between a polyol and a polybasic acid such as adipic acid or phthalic acid. Examples of the polyol to be reacted with the polybasic acid include aliphatic polyols such as ethylene glycol, propylene glycol, neopentyl glycol, and pentaerythritol; aromatic alcohols such as dihydroxynaphthalene, trihydroxynaphthalene, and bisphenol A; and sulfur-containing polyols such as bis-[4-(hydroxyethoxy)phenyl] sulfide.

The polyisocyanate to be reacted with the polyol is a compound having two or more NCO groups per molecule. Specific examples thereof include, but are not limited to, aliphatic isocyanates such as ethylene diisocyanate, trimethylene diisocyanate, and tetramethylene diisocyanate; alicyclic isocyanates such as isophorone diisocyanate, norbornane diisocyanate, bis(isocyanatemethyl)cyclohexane, and 2-isocyanatemethyl-3-(3-isocyanatepropyl)-5-isocyanatemethyl-bicyclo[2,2,1]-heptane; aromatic isocyanates such as xylylene diisocyanate, bis(isocyanateethyl)benzene, bis(isocyanatemethyl)naphthalene, and bis(isocyanatemethyl)diphenyl ether; sulfur-containing aliphatic isocyanates such as thiodiethyl diisocyanate; aliphatic sulfide-based isocyanates such as bis[2-(isocyanatomethylthio)ethyl]sulfide; aromatic sulfide-based isocyanates such as diphenylsulfide-2,4'-diisocyanate; aromatic disulfide-based isocyanates such as diphenyl disulfide-4,4'-diisocyanate; aromatic sulfone-based isocyanates such as diphenylsulfone-4,4'-diisocyanate; sulfonic acid ester-based isocyanates such as 4-methyl-3-isocyanatebenzenesulfonyl-4'-isocyanatephenol ester; aromatic sulfonamide-based isocyanates such as 4-methyl-3-isocyanatebenzenesulfonylanilide-3'-methyl-4'-isocyanate; and sulfur-containing heterocyclic isocyanates such as thiophene-2,5-diisocyanate.

The above-mentioned polyisocyanate is usually used in such an amount that the amount of isocyanate groups (NCO groups) is from about 0.8 to 1.2 mol per mol of the hydroxyl groups contained in the above-mentioned polyol.

In the present invention, the polyrotaxane is preferably present in the adhesive layer 15 formed of the above-mentioned adhesive (for example, a urethane-based adhesive produced from a polyester polyol and a polyisocyanate) in an amount of less than 17 mass%, particularly less than 10 mass%. When the polyrotaxane is present in such an amount, the stress dispersion effect owing to sliding of the cyclic molecules 3 of the polyrotaxane is sufficiently exhibited, so that, for example, the impact resistance is improved, and bag breakage of the pouch 20 produced from the laminate due to dropping is effectively avoided.

It was confirmed in the examples described later that an adhesive coating film containing the polyrotaxane in the amount described above has an improved loss tangent (tan $\delta$) in a dynamic viscoelasticity test (10 Hz) at 5°C and improved vibration absorbability.

For example, in Examples 1 to 4 described later, a polyrotaxane is incorporated in a urethane-based adhesive, and an adhesive coating film incorporating the polyrotaxane exhibits a loss tangent (tan $\delta$) of 0.21 or greater, particularly 0.23 or greater in a dynamic viscoelasticity test (10 Hz) at 5°C, and has improved vibration absorbability.

In addition, the adhesive coating film containing a polyrotaxane in an amount as described above and having improved vibration absorbability preferably has an elastic modulus equivalent to that of an adhesive coating film not containing a polyrotaxane in order to strongly bond the films to each other. As shown in the results of the examples described later, the adhesive coating films of Examples 1 to 4 have a storage elastic modulus E' exceeding 1 GPa in a dynamic viscoelasticity test (10 Hz) at 5°C as in Comparative Example 1 in which an adhesive coating film not containing a polyrotaxane is used.

In the present invention, the adhesive incorporating the polyrotaxane as described above is used, which is produced by adding the polyrotaxane to a reaction component for forming the adhesive (for example, a coating composition containing a polyester polyol and a polyisocyanate dispersed in an organic solvent). Specifically, the polyrotaxane-containing coating composition is applied to a film forming one of the olefin-based resin layers, then a film forming the other olefin-based resin layer is pressure-bonded, and the films are heated to an appropriate temperature to cure the coating composition by polymerization and remove the solvent to form the adhesive layer 15, whereby the olefin-based laminate 10 shown in FIG. 2 including the thermoplastic resin layer 11 and the thermoplastic resin layer 13 bonded to each other with the adhesive layer 15 is formed.

In such a laminate 10, the thickness of the adhesive layer 15 is very small, and is of course a thickness within a range in which the above-mentioned olefin-based resin content in the laminate 10 is satisfied. For example, the thickness is generally from about 2 to 5 g/m$^2$.

Bag Production with Olefin-Based Laminate

The above-mentioned olefin-based laminate 10 of the present invention can be used in various applications as a packaging material. Most suitably, the olefin-based laminates 10 are formed into a bag by heat sealing bonding or ultrasonic sealing bonding between the unstretched thermoplastic resin layers 11 and used as the pouch (bag-shaped container) 20.

Bag production is carried out by known means. For example, an empty pouch is produced by three-side sealing using two olefin-based laminates 10, 10, the pouch is filled with contents from the opening, and finally the opening is closed by heat sealing.

In addition, it is also possible to produce an empty pouch by folding back a single olefin-based laminate 10 and heat sealing both side edges to each other. In this case, it is not necessary to heat seal the bottom portion. Further, it is also possible to produce an empty pouch using olefin-based laminates 10 dedicated for side portions or a bottom portion. Such a method is advantageous in increasing the volume of the pouch 20 or imparting a standing property.

The pouch produced from the olefin-based laminate 10 of the present invention and filled with the contents is excellent in monomaterial properties with respect to the olefin-based resin typified by polypropylene and polyethylene, and is excellent in recyclability as the olefin-based resin because the pouch contains a large amount of the olefin-based resin. Further, although the pouch contains a large amount of the olefin-based resin, the pouch has high impact resistance and high bag drop strength, and bag breakage due to dropping from a height is effectively avoided.

Suitable Aspects of the Present Invention

As long as the olefin-based laminate 10 of the present invention has the above-mentioned olefin-based resin content and basic configuration, various aspects can be adopted to improve properties required of a packaging material such as a packaging bag.

For example, one or more stretched olefin-based resin layers can be further stacked over the olefin-based resin layer 13 (stretched olefin-based resin layer) with a polyrotaxane-containing adhesive layer 15 interposed therebetween, whereby the strength can be further increased.

In addition, an inorganic coating can be provided on at least one surface of the olefin-based resin layer 13 (stretched olefin-based resin layer) or the stretched olefin-based resin layer stacked over the olefin-based resin layer 13 with the adhesive layer 15 interposed therebetween to improve gas barrier properties against oxygen or the like. Examples of such an inorganic coating include vapor-deposited films of various metals or metal oxides, coating films mainly containing a silicon oxide, coating films of a condensate of a metal alkoxide, coating films formed by a crosslinking reaction between a carboxylic acid and a metal, and coating films in which a metal oxide is dispersed. On the vapor-deposited film, a coating film as described above is suitably provided as a protective film (so-called topcoat layer).

The vapor-deposited film is an inorganic vapor-deposited film formed by a technique such as physical vapor deposition typified by sputtering, vacuum vapor deposition, ion plating, or the like, or chemical vapor deposition typified by plasma CVD, and is, for example, a film formed of some metal or metal oxide. Since such a vapor-deposited film is formed of an inorganic substance, it exhibits higher oxygen barrier properties than a gas barrier resin such as an ethylene-vinyl alcohol copolymer does.

Although the vapor-deposited film may be formed directly on the surface of the above-mentioned thermoplastic resin film, it is preferable to coat the surface of the thermoplastic resin film with a hydrophilic resin such as polyester, polyethyleneimine, an acrylic resin, polyamide, or polyurethane and form the vapor-deposited film on the coating film (so-called anchor coat layer) in order to enhance the smoothness of the vapor-deposited film and the adhesion to the surface of the thermoplastic resin film.

In the present invention, the inorganic coating is preferably a vapor-deposited film formed of a silicon oxide, an aluminum oxide, a silica-alumina composite oxide or the like from the viewpoint that the formed film is dense and ensures particularly high oxygen barrier properties, and is most suitably a vapor-deposited film of a silicon oxide because the film particularly ensures transparency (the haze is 5% or less) and exhibits good visibility.

In addition, it is preferable that the above-mentioned coating film of an inorganic substance be provided as a protective film (topcoat layer) on the vapor-deposited film. Such a coating film penetrates into fine defects (cracks) generated in the above-mentioned vapor-deposited film, and functions as a protective film for preventing growth of defects and preventing generation of new defects. The coating film suitably contains a metal alkoxide such as alkoxysilane or alkoxytitanium, and is suitably partially condensed from the viewpoint of adhesion to the vapor-deposited film.

The thickness of the inorganic coating described above varies depending on the required level of oxygen barrier properties, and in the case of a vapor-deposited film, the inorganic coating is required to be thick enough to ensure an oxygen permeability of 1 cc/m$^2$/day/atom or less before retort treatment without impairing the properties of the underlying thermoplastic resin film upon vapor deposition, and the thickness is generally required to be from about 1000 to 10 nm, particularly from about 100 to 10 nm.

The thickness and constituent elements of the inorganic coating can be determined by depth direction analysis using X-ray photoelectron spectroscopy (XPS) or Auger electron spectroscopy (AES), energy dispersive X-ray analysis (EDX), or the like.

In addition, instead of the above-mentioned inorganic coating, an organic coating may be provided to ensure gas barrier properties, and examples thereof include a coating film mainly containing polyvinyl alcohol or an ethylene-vinyl alcohol copolymer. Although the coating may be formed directly on the surface of the above-mentioned thermoplastic resin film, it is preferable to coat the surface of the thermoplastic resin film with a hydrophilic resin such as polyester, polyethyleneimine, an acrylic resin, polyamide, or polyurethane and form the organic coating on the coating film (so-called anchor coat layer) in order to enhance the smoothness of the coating and the adhesion to the surface of the thermoplastic resin film.

It is also possible to provide a layer containing a resin other than the olefin-based resin as long as the olefin-based resin content is within the above-mentioned large amount range. For example, a layer of a stretched film of a resin having a melting point higher than that of the olefin-based resin, such as polyamide or an ethylene-vinyl alcohol copolymer, can be provided as a strength reinforcing layer in order to avoid a decrease in puncture strength or a decrease in impact resistance due to relaxation of orientation of the stretched layer caused by heat treatment. The most suitable high-melting point resin for such a strength reinforcing layer is polyamide.

The polyamide is not particularly limited, and various compounds can be mentioned. In general, nylon 6, nylon 6,6, nylon 11, nylon 12, nylon 13, a nylon 6/nylon 6,6 copolymer, aromatic nylon (for example, polymetaxylylene adipamide), amorphous nylon (for example, nylon 6I/nylon 6T), or the like is suitably used.

Further, in the stretched film forming the above-mentioned strength reinforcing layer, in order to satisfy the monomaterial properties (a high olefin-based resin content) of the olefin-based laminate 10, an olefin-based resin (for example, a propylene-based resin) may be blended in a high-melting point resin within a range in which the high strength is not impaired. Alternatively, a multilayer stretched film including a stretched film of an olefin-based resin and a stretched film of a high-melting point resin can be provided as the strength reinforcing layer.

For example, in the present invention, the layer configuration of the suitable olefin-based laminate 10 is as follows, where an unstretched layer of a propylene-based resin most suitably used as the olefin-based resin is represented by CPP, a stretched layer is represented by OPP, a polyrotaxane-containing adhesive layer is represented by AD, an inorganic coating is represented by INOR, and a strength reinforcing layer is represented by PP/Ny.

CPP/AD/(INOR)OPP
CPP/AD/(INOR)OPP/AD/OPP
CPP/AD/OPP/AD/(INOR)OPP
CPP/AD/(PP/Ny)/AD/(INOR)OPP

(INOR) means that an inorganic coating may be but does not have to be present, and the inorganic coating may be formed on whichever side of OPP.

PP represents a propylene-based resin, and Ny represents nylon.

In the laminate of the present invention produced by laminating the layers or films described above, a printing layer can be stacked between the layers or outside the stretched layer.

Example

The present invention-1 is described in the following experimental example.

Various materials used in the following experiments are as follows.

One Thermoplastic Resin Layer (Unstretched Sealant Film)

CPP film:

Toray Advanced Film Co., Ltd., TORAYFAN ZK 500
Thickness; 70 $\mu$m
Resin composition of film;

Polypropylene (PP) component 80 mass%
Polyethylene (PE) component 20 mass%

The Other Thermoplastic Resin Layer

Gas barrier stretched polypropylene film having inorganic coating formed on one surface:

BAOPP film
Thickness; 20 $\mu$m
Configuration; OPP/coating film (anchor coat)/inorganic coating
Inorganic coating: vapor-deposited film mainly containing silicon oxide and protective film (topcoat) mainly containing silicon or silicon oxide

Adhesive

Urethane-based adhesive

manufactured by Toyo Morton Co., Ltd.
Main agent A; polyester-based (solid component 50 mass%)
Curing agent B; polyisocyanate-based (solid component 70 mass%)

The mass ratio of the main agent A to the curing agent B was 44:4.

Polyrotaxane

Polyrotaxane-1

SeRM Super Polymer SH1300P manufactured by ASM Inc. (Advanced Soft Materials Inc.)
Molecular weight of axle molecule; 11000
Functional group modification; hydroxyl group

Polyrotaxane-2

SeRM Super Polymer SH2400P manufactured by ASM Inc.
Molecular weight of axle molecule; 20000
Functional group modification; hydroxyl group

Production of a laminate (laminate film), bag production, and measurement of various physical properties were performed as follows.

Production of Laminate (Lamination)

An unstretched sealant film (CPP film) and a gas barrier stretched film (BAOPP film) were stacked by a dry lamination method to produce a laminate. In this process, the adhesive was applied using a bar coater. The coating amount was adjusted with ethyl acetate so as to be from about 3 to 3.5 g/m$^2$ in terms of solid component. Further, the CPP film was stacked so as to face the inorganic coating of the BAOPP film.

After the lamination, curing was performed at 50°C for 4 to 5 days.

Bag Making

The laminate (laminate film) produced as described above was cut into two pieces of 140 mm × 180 mm, and formed into a bag filled with 200 g of water to produce a pouch. Sealing was performed under the following conditions using an impulse sealer manufactured by FUJI IMPULSE CO., LTD.

Sealing conditions: 185°C, 1.4 (s)
Seal width: about 5 mm

Bag Drop Strength of Pouch

The pouches were cooled overnight at 5°C, and two pouches in a horizontal position were laminated and dropped from a height of 120 cm and measured. The lower pouch was used as a test pouch. The average of the number of times where the pouch was unbroken was determined with N (number of tests) $\geq$ 3.

Dynamic Viscoelasticity of Adhesive Coating Film

The dynamic viscoelasticity was measured using a dynamic viscoelasticity measuring device available from Seiko Instruments Inc. The test conditions are as follows:

Test specimen film: length of 20 mm long and width of 10 mm
Inter-chuck distance: 5 mm
Temperature range: from -20°C to 40°C
Temperature rise rate: 2°C/min
Frequency: 10 Hz
tan δ (loss tangent):

The loss tangent was determined by loss elastic modulus (E")/storage elastic modulus (E') at 5°C.
E' (storage elastic modulus): The storage elastic modulus was determined from a value at 5°C.

Amount of Olefin-based Resin with Respect to Total Amount of Laminate

The amount of the olefin-based resin (mass%) was determined by the following formula.

[Math. 1]

$$\text{AMOUNT OF OLEFIN-BASED RESIN (mass\%)} = \left[ 1 - \frac{\text{AMOUNT OF ADHESIVE} + \text{AMOUNT OF RESIN OTHER THAN OLEFIN-BASED RESIN}}{\text{TOTAL AMOUNT OF LAMINATE}} \right] \times 100$$

In the above formula, the amount of the olefin-based resin is calculated assuming that as for the adhesive, the coating amount is 3.25 g/m$^2$, the thickness is 3.5 $\mu$m, and the density is 0.93 g/cm$^3$.
The amount is calculated assuming that the density of polypropylene (PP) is 0.90 g/cm$^3$. The amount is calculated assuming that the density of polyethylene (PE) is 0.93 g/cm$^3$.

Example 1

A urethane-based adhesive (main agent A, 44 g; curing agent B, 4 g) and the polyrotaxane-1 (0.48 g) were mixed to prepare an adhesive containing 1.9 mass% of the polyrotaxane-1 with respect to the combined solid components of the main agent A, the curing agent B, and the polyrotaxane-1, and the dynamic viscoelasticity of the adhesive coating film was evaluated and shown in Table 1. (As described above, the coating amount of this adhesive is adjusted with ethyl acetate so as to be from about 3 to 3.5 g/m$^2$ in terms of solid component.)
Next, the adhesive was applied to a CPP film, and a BAOPP film was laminated thereon by a dry lamination method to produce a laminate.
After being cured at 50°C for 4 days, the laminate was formed into a pouch (filled with 200 g of water), and then evaluated for bag drop strength.
In addition, the olefin-based resin content with respect to the total amount of the laminate was calculated.
The results are shown in Table 2.

Example 2

An adhesive was prepared in the same manner as in Example 1 except that the amount of the polyrotaxane-1 was increased to 1.48 g (the adhesive had a polyrotaxane-1 content of 5.6 mass%), and the adhesive coating film was evaluated for dynamic viscoelasticity. Further, a laminate and a pouch were produced in the same manner as in Example 1 except that this adhesive was used, and evaluated for various properties. The results are shown in Tables 1 and 2.

Example 3

An adhesive was prepared in the same manner as in Example 1 except that the polyrotaxane-2 was used instead of the polyrotaxane-1, and a laminate and a pouch were produced and evaluated for various properties. The results are shown in Tables 1 and 2.

Example 4

An adhesive was prepared in the same manner as in Example 2 except that the polyrotaxane-1 was changed to the polyrotaxane-2, and a laminate and a pouch were produced and evaluated for various properties. The results are shown in Tables 1 and 2.

Comparative Example 1

An adhesive (having a polyrotaxane content of 0 mass%) was prepared in the same manner as in Example 1 except that the polyrotaxane-1 was not used. A laminate and a pouch were produced in the same manner as in Example 1 except that this adhesive was used, and evaluated for various properties. The results are shown in Table 2.

In Tables 1 and 2, the adhesive is represented by AD, the polyrotaxane-1 is represented by PR1, and the polyrotaxane-2 is represented by PR2. In addition, AD (PR1) means that the polyrotaxane-1 is incorporated in the urethane-based adhesive, and AD (PR2) means that the polyrotaxane-2 is incorporated in the urethane-based adhesive.

PO represents an olefin-based resin.

[Table 1]

|  | Amount of PR incorporated in AD (mass%) | tan δ of AD coating film | E' of AD coating film (GPa) |
|---|---|---|---|
| Example 1 | 1.9 | 0.21 | > 1 (1.53) |
| Example 2 | 5.6 | 0.23 | > 1 (1.29) |
| Example 3 | 1.9 | - | - |
| Example 4 | 5.6 | - | - |
| Comparative Example 1 | 0 | 0.21 | > 1 (1.61) |

[Table 2]

|  | Layer configuration | PR amount in adhesive (mass%) | Number of times where pouch was unbroken (times) | PO amount with respect to total amount of laminate (mass%) |
|---|---|---|---|---|
| Example 1 | BAOPP/AD (PR1) /CPP | 1.9 | > 10 (14) | 96 |
| Example 2 | BAOPP/AD (PR1) /CPP | 5.6 | > 10 (15) | 96 |
| Example 3 | BAOPP/AD (PR2) /CPP | 1.9 | > 10 (14) | 96 |
| Example 4 | BAOPP/AD (PR2) /CPP | 5.6 | > 10 (14) | 96 |
| Comparative Example 1 | BAOPP/AD/CPP | 0 | 10 | 96 |

Reference Example

An adhesive having a polyrotaxane-1 or polyrotaxane-2 content of 17.7 mass% was prepared in the same manner as in Example 1 or Example 3, respectively, except that the amount of the polyrotaxane-1 or the polyrotaxane-2 was increased to 5.33 g. A pouch was produced in the same manner as in Example 1 or Example 3, and subjected to a bag drop test. As a result, the number of times where the pouch was unbroken was not so different from that of Comparative Example 1 in which no polyrotaxane was incorporated, and it was found that the optimum polyrotaxane content in the adhesive is less than 17 mass%.

The present invention-2 is described in the following experimental example.

Various materials used in the following experiments are as follows.

Sealant Polyethylene Film

A linear low density polyethylene film having a thickness of 150 μm was used.

Base Polyethylene Film

A biaxially stretched polyethylene film having a thickness of 25 μm was used.

Adhesive

Urethane-based adhesive

manufactured by Toyo Morton Co., Ltd.
Main agent C; polyester-based (solid component 60 mass%)
Curing agent D; polyisocyanate-based (solid component 52.5 mass%)

The mass ratio of the main agent C to the curing agent D was 18:4.

Polyrotaxane

Polyrotaxane-1

SeRM Super Polymer SH1300P manufactured by ASM Inc. (Advanced Soft Materials Inc.)
Molecular weight of axle molecule; 11000
Functional group modification; hydroxyl group

Production of a laminate (laminate film), bag production, and measurement of various physical properties were performed as follows.

Production of Laminate (Lamination)

The sealant polyethylene film and the biaxially stretched polyethylene film were stacked by a dry lamination method to produce a laminate. In this process, the adhesive was applied using a bar coater. The coating amount was adjusted with ethyl acetate so as to be from about 3 to 3.5 $g/m^2$ in terms of solid component.
After the lamination, curing was performed at 50°C for 4 to 5 days.

Bag Making

The laminate (laminate film) produced as described above was formed into a bag of 130 mm in width × 175 mm in height × 36 mm in bottom material folding width, and the bag was filled with 330 g of water. Sealing was performed under the following conditions using a thermal plate heat sealer.

Sealing conditions: top heating 200°C, 1.0 (s), 0.3 MPa
Seal width: about 5 mm

Bag Drop Strength of Pouch

The pouch was cooled overnight at 5°C and perpendicularly dropped from a height of 150 cm, and the bag drop strength was measured.

Example 5

A urethane-based adhesive (main agent C; 18 g, curing agent D; 4 g) and the polyrotaxane-1 (0.26 g) were mixed to prepare an adhesive containing 2.0 mass% of the polyrotaxane-1 with respect to the combined solid components of the main agent A, the curing agent B, and the polyrotaxane-1. (As described above, the coating amount of this adhesive is adjusted with ethyl acetate so as to be from about 3 to 3.5 g/m² in terms of solid component.)

Next, the adhesive was applied to a biaxially stretched polyethylene film (BAOPE), and a sealant polyethylene film (LLDPE) was laminated thereon by a dry lamination method to produce a laminate.

After being cured at 50°C for 4 days, the laminate was formed into a pouch (filled with 330 g of water), and then evaluated for bag drop strength.

Comparative Example 2

An adhesive (having a polyrotaxane content of 0 mass%) was prepared in the same manner as in Example 5 except that the polyrotaxane-1 was not used. A laminate and a pouch were produced in the same manner as in Example 1 except that this adhesive was used, and evaluated for various properties. The results are shown in Table 3.

[Table 3]

| | Layer configuration | PR amount in adhesive (mass%) | Number of times where pouch was unbroken (times) | PO amount with respect to total amount of laminate (mass%) |
|---|---|---|---|---|
| Example 5 | BAOPE/AD (PR-1)/LLDPE | 2.0 | 9 | 98 |
| Comparative Example 2 | BAOPE/AD/LLDPE | 0 | 4 | 98 |

Reference Signs List

1: Polyrotaxane
2: Axle molecule
3: Cyclic molecule
4: Terminal group
5: Side chain
10: Olefin-based laminate
11: Thermoplastic resin layer
13: Thermoplastic resin layer
15: Adhesive layer
20: Pouch

**Claims**

1. A laminate having a layer configuration comprising two thermoplastic resin layers and an adhesive layer provided between the two thermoplastic resin layers, wherein

   the adhesive layer is formed of an adhesive incorporating a polyrotaxane, and
   the laminate contains 80 mass% or greater of an olefin-based resin with respect to a total amount of the laminate.

2. The laminate according to claim 1, wherein the olefin-based resin is an ethylene-based resin or a propylene-based resin.

3. The laminate according to claim 1, wherein the olefin-based resin is a resin composition containing an ethylene-based resin and a propylene-based resin.

4. The laminate according to claim 1, wherein in the adhesive layer, the polyrotaxane is incorporated in an amount of less than 17 mass%.

5. The laminate according to claim 1, wherein in the adhesive layer, the polyrotaxane is incorporated in a urethane-based adhesive.

6. The laminate according to claim 1, wherein in the polyrotaxane, a functional group at a terminal of a side chain of a cyclic molecule is a hydroxyl group.

7. The laminate according to claim 1, wherein of the two thermoplastic resin layers, one thermoplastic resin layer is an unstretched sealant film containing the olefin-based resin, and the other thermoplastic resin layer is formed of an unstretched or stretched film.

8. The laminate according to claim 7, wherein the other thermoplastic resin layer is formed of a stretched film, and the stretched film is provided with an inorganic coating or an organic coating.

9. The laminate according to claim 7, wherein an intermediate thermoplastic resin layer is provided between the one thermoplastic resin layer and the other thermoplastic resin layer.

10. The laminate according to claim 9, wherein the other thermoplastic resin layer is a stretched film, the intermediate thermoplastic resin layer is an unstretched or stretched film, and at least one of the other thermoplastic resin layer or the intermediate thermoplastic resin layer contains the olefin-based resin.

11. The laminate according to claim 10, wherein at least one of the stretched film forming the other thermoplastic resin layer or the stretched film forming the intermediate thermoplastic resin layer is provided with an inorganic coating or an organic coating.

12. A pouch produced from the laminate according to claim 1.

# FIG. 1

# FIG. 2

# FIG. 3

## INTERNATIONAL SEARCH REPORT

| International application No. |
|---|
| **PCT/JP2022/040963** |

**A.     CLASSIFICATION OF SUBJECT MATTER**

$\textbf{\textit{B32B 27/00}}$(2006.01)i; $\textbf{\textit{B32B 27/32}}$(2006.01)i; $\textbf{\textit{B32B 27/40}}$(2006.01)i; $\textbf{\textit{B65D 65/40}}$(2006.01)i
FI:    B32B27/00 D; B32B27/32 Z; B65D65/40 D; B32B27/40

According to International Patent Classification (IPC) or to both national classification and IPC

**B.     FIELDS SEARCHED**

Minimum documentation searched (classification system followed by classification symbols)
     B32B27/00; B32B27/32; B32B27/40; B65D65/40

Documentation searched other than minimum documentation to the extent that such documents are included in the fields searched

     Published examined utility model applications of Japan 1922-1996
     Published unexamined utility model applications of Japan 1971-2023
     Registered utility model specifications of Japan 1996-2023
     Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | WO 2019/146633 A1 (TORAY INDUSTRIES, INC.) 01 August 2019 (2019-08-01) claims, examples 10, 11 | 1-12 |
| A | JP 2019-156940 A (LINTEC CORP.) 19 September 2019 (2019-09-19) claims, examples 1-6 | 1-12 |
| A | JP 2019-104799 A (LINTEC CORP.) 27 June 2019 (2019-06-27) LINTEC CORP. | 1-12 |
| A | JP 2021-1649 A (TOPPAN PRINTING CO., LTD.) 07 January 2021 (2021-01-07) claims, examples 1, 2 | 1-12 |
| A | JP 2021-1275 A (OJI HOLDINGS CORP.) 07 January 2021 (2021-01-07) claims, paragraph [0024], examples 1-4 | 1-12 |

☐ Further documents are listed in the continuation of Box C.      ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **04 January 2023** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/040963**

| Patent document cited in search report | | | Publication date (day/month/year) | Patent family member(s) | | | Publication date (day/month/year) |
|---|---|---|---|---|---|---|---|
| WO | 2019/146633 | A1 | 01 August 2019 | US | 2020/0347193 | A1 | |
| | | | | claims, examples 10, 11 | | | |
| | | | | EP | 3744767 | A1 | |
| | | | | CN | 111615530 | A | |
| | | | | TW | 201936781 | A | |
| JP | 2019-156940 | A | 19 September 2019 | CN | 110256976 | A | |
| | | | | KR | 10-2019-0107563 | A | |
| | | | | TW | 201938734 | A | |
| JP | 2019-104799 | A | 27 June 2019 | (Family: none) | | | |
| JP | 2021-1649 | A | 07 January 2021 | (Family: none) | | | |
| JP | 2021-1275 | A | 07 January 2021 | TW | 202111051 | A | |

**EP 4 450 279 A1**

**Patent documents cited in the description**

- JP 2021001650 A
- JP 6153183 B
- JP 6655555 B